# EUROPEAN PATENT APPLICATION

(11) **EP 3 048 324 A1**
(43) Date of publication of application: **27.07.2016**
(21) Application number: 13893766.9
(22) Date of filing: 19.09.2013
(51) Int. Cl.: F16D 65/18, F16C 11/04, F16C 33/12, F16D 125/28

(54) **DISC BRAKE DEVICE**

(71) Applicant: TBK Co., Ltd., Machida-shi, Tokyo 194-0045 (JP)
(72) Inventor: OSAWA, Makoto, Machida-shi Tokyo 194-0045 (JP); YOSHITANI, Hirotada, Machida-shi Tokyo 194-0045 (JP)
(74) Representative: Patentwerk B.V.
(86) International application number: PCT/JP2013/005529
(87) International publication number: WO 2015/040652

(57) **Abstract**

In the brake device (1) according to the present invention, a brake shaft (20) that configures a pad pressing device (10) for pressing brake pads (4, 5) against rotor surfaces (2L, 2R) is supported on an inner surface of a brake housing (6) by a cylindrical shaft support member (25) and is turned in a brake actuation direction and a brake release direction along a surface of the shaft support member (25). The shaft support member (25) is provided in such a manner that a portion of the surface thereof is inserted into a support concavity (19) that is formed on the inner surface of the brake housing (6). The coefficient of friction of the surface of the support concavity (19) is greater than the coefficient of friction of the surface of the shaft support member (25).

## Description

### Technical field

The present invention relates to a disc brake device equipped in an automobile and the like.

### technical BACKGROUND

As such a disc brake device, there has been known a floating brake device that is configured with a disc rotor that rotates along with a wheel of an automobile or the like, a pair of brake pads that are disposed to face each other with the disc rotor therebetween, and a caliper that is provided in such a manner as to stride over the outer circumference of the disc rotor and to be movable in the direction perpendicular to the rotor surfaces of the disc rotor (see Patent Documents 1 and 2, for example). This disc brake device has a brake actuator only on one of the brake pads, wherein this brake pad is pressed against the rotor surface by the actuation of the brake actuator and the resultant reaction force pulls the other brake pad toward the opposite rotor surface through the caliper, causing the pair of brake pads to sandwich the disc rotor therebetween and use the frictional force thereof to brake the rotation of the disc rotor and the wheel.

This type of disc brake device has a pad pressing device for pressing the brake pads against the rotor surfaces of the disc rotor by the actuation of the brake actuator. The pad pressing device has a brake shaft disposed substantially parallel to the rotor surfaces, wherein this brake shaft is turned in the brake actuation direction by the actuation of the brake actuator, to press the brake pads against the rotor surfaces. Also, by releasing the braking operation, the brake shaft is turned in the brake release direction by the biasing force of a spring, separating the brake pads from the rotor surfaces.

### Prior arts list

### Patent document

Patent Document 1: Japanese Patent No. 3881710
Patent Document 2: Japanese Patent No. 3960396

### Summary of the invention

### Problems to be solved by the invention

In the disc brake device described above, the brake shaft is supported turnably on the inside of the brake housing (the caliper). Various configurations have conventionally been devised as a method for turnably supporting the brake shaft. Because most brake shafts are supported by bearings, the inside of the brake housing has a depression or a projection. Such a depression or projection has a machine finish in order to have a smooth surface. However, the section where the depression or projection is to be formed is located at the back of the brake housing, making it difficult to machine the depression or projection and consequently increasing the manufacturing cost. Machining is even more difficult especially in a caliper with an integral bridge because a tool and the like cannot be inserted from the front.

The present invention was contrived in view of these problems, and an object thereof is to provide a disc brake device that is designed to reduce the number of machining steps on the interior of the brake housing and to easily create a structure for turnably supporting the brake shaft.

### Means to solve the problems

In order to achieve the foregoing object, a disc brake device according to the present invention has: a disc rotor that rotates along with a wheel; a brake pad that is disposed to face a rotor surface of the disc rotor; a pad pressing device that presses the brake pad against the rotor surface; and a brake housing that houses the pad pressing device therein (e.g., a caliper 6 according to an embodiment), the disc brake device being configured to apply a brake to the disc rotor and the wheel by using frictional force generated between the brake pad and the rotor surface when the pad pressing device presses the brake pad against the rotor surface. In this configuration, the pad pressing device has a brake actuator that is actuated when a braking operation is performed, a brake shaft that is disposed substantially parallel to the rotor surface and turned in a brake actuation direction by the actuation of the brake actuator (e.g., an operating shaft 20 according to the embodiment), a pad pushing mechanism that moves the brake pad toward the rotor surface by means of the turning motion of the brake shaft, and a brake release spring that moves the pad pushing mechanism away from the rotor surface and turns the brake shaft in a brake release direction when the braking operation is released (e.g., a return spring 15 according to the embodiment). The brake shaft is supported on an inner surface of the brake housing by a cylindrical shaft support member extending substantially parallel to the rotor surface, and is turned in the brake actuation direction and the brake release direction along a surface of the shaft support member. The shaft support member is provided in such a manner that a portion of the surface thereof is inserted into a support concavity that is formed on the inner surface of the brake housing. The coefficient of friction of a surface of the support concavity is greater than the coefficient of friction of the surface of the shaft support member.

In the disc brake device with the foregoing configuration, it is preferred that the shaft support member be finished to have a smooth surface, that the support concavity be formed by casting at the same time as when the brake housing is formed by casting, and that the surface of the support concavity remain rough without being finished. In other words, it is preferred that the support concavity be merely formed by casting or that the support concavity be only subjected to rough machining after casting. In addition, it is preferred that when incorporating the brake shaft in the support concavity, the radius of an arc of the support concavity be slightly smaller than the radius of the brake shaft in order to improve the stability of the brake shaft, and that the support concavity come into contact with the brake shaft at both ends of the arc of the support concavity. It is also preferred that the support concavity have a shape such that the support concavity comes into contact with the brake shaft at both ends thereof also in the shaft axial direction, i.e., it is preferred that a middle portion of the support concavity be slightly depressed.

### Advantageous effects of the invention

According to the disc brake device of the present invention, the support concavity with a rough surface is formed on the inner surface of the brake housing. By inserting the cylindrical shaft support member into the support concavity, the brake shaft can be supported turnably by the shaft support member. Specifically, the support structure of the brake shaft can be created without finishing the surface of the support concavity. Therefore, the number of complicated machining steps performed on the interior of the brake housing can be reduced, achieving a reduction in manufacturing cost.

A further reduction in manufacturing cost can be accomplished by casting the support concavity, which is to be formed on the inner surface of the brake housing, together with the brake housing so that it is no longer necessary to insert a tool and the like into the brake housing to form the support concavity. In addition, a caliper with an integral bridge can be produced easily at low cost. Moreover, casting fluctuation can be avoided by setting the support concavity as a reference position for machining (finishing) the brake housing. In so doing, a position where a jig of the same shape as the brake shaft is combined with the support concavity is taken as the reference position, so that a position where the casted surface (surface) of the support concavity actually comes into contact with the brake shaft can be recreated.

### Brief description of the drawings

FIG. 1 is a vertical cross-sectional diagram of a substantially middle portion of a disc brake device according to the present invention;
FIG. 2 is a horizontal cross-sectional diagram taken along arrow II-II shown in FIG. 1; and
FIG. 3 is a vertical cross-sectional diagram showing a modification of a support concavity to be formed in a caliper.

### Description of the embodiments

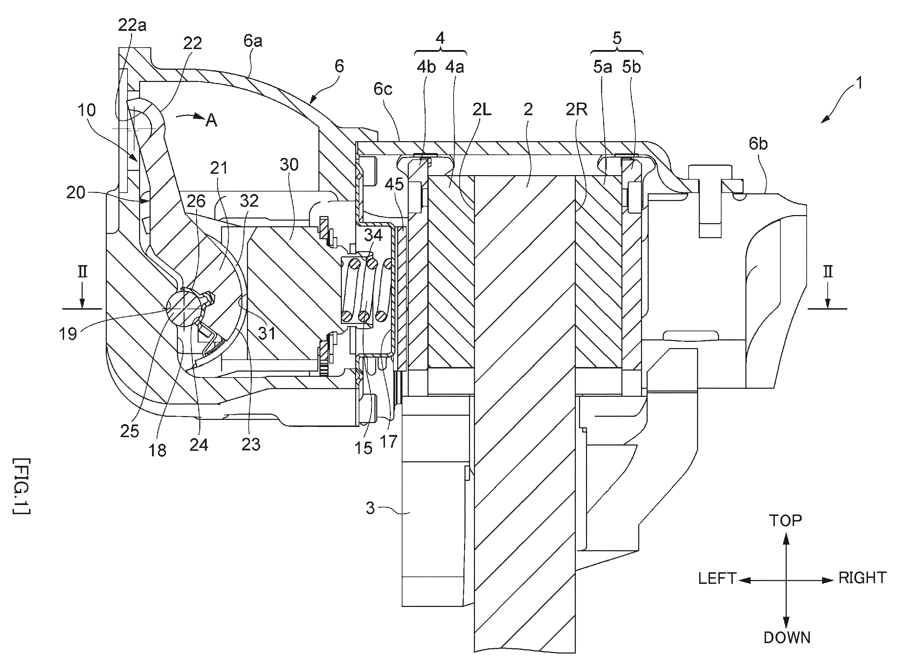

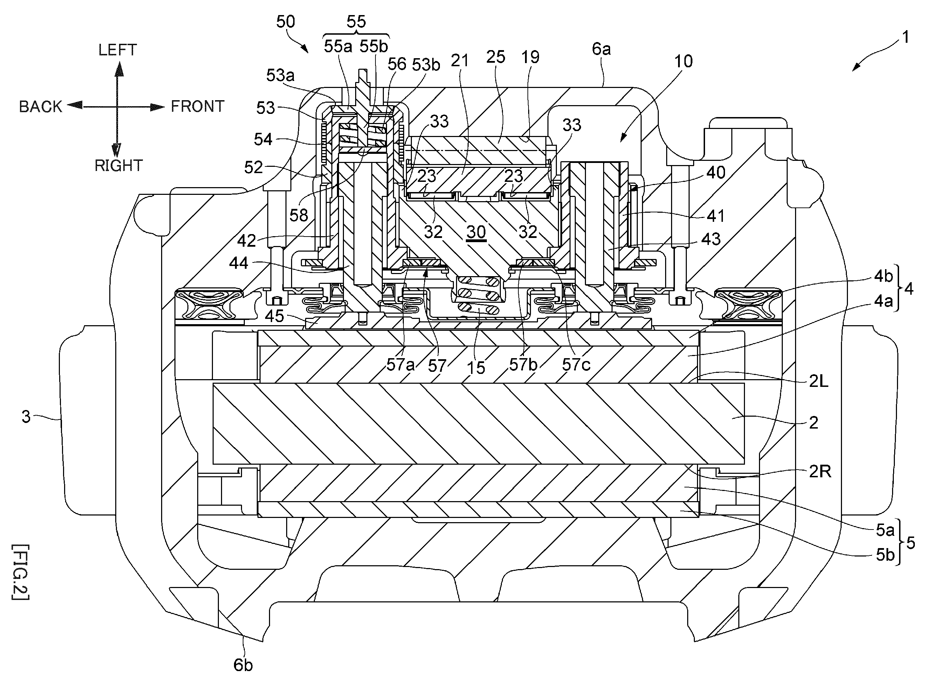

An embodiment of the present invention is described hereinafter with reference to the drawings. FIGS. 1 and 2 each show a disc brake device according to an embodiment of the present invention. Hereinafter, the directions of the arrows shown in the diagrams that indicate top, down, left, right, front, and back are described as a vertical direction, a horizontal direction, and a front-back direction, for convenience of explanation.

The disc brake device 1 is a floating disc brake device that is configured with, as shown in FIGS. 1 and 2, a disc-shaped disc rotor 2 that rotates along with a wheel of an automobile or the like, a carrier 3 fixed to an axle (an axle bearing case), a pair of brake pads 4, 5 that are disposed to face each other in the carrier 3, with the disc rotor 2 therebetween, a caliper 6 that is provided in such a manner as to be movable in the horizontal direction with respect to the disc rotor 2 in the carrier 3, a brake actuator (not shown) that is actuated by air or oil pressure, and a pad pressing device 10 for pressing the left and right brake pads 4 and 5 against left and right side surfaces 2L and 2R of the disc rotor 2 (referred to as "rotor surfaces 2L, 2R," hereinafter) by the actuation of the brake actuator.

A guide sleeve (not shown) that extends in the direction substantially perpendicular to the rotor surfaces 2L, 2R of the disc rotor 2 (the surfaces against which the brake pads are pressed) is attached to the carrier 3 by a bolt. The caliper 6 is provided in such a manner as to be movable in the direction substantially perpendicular to the rotor surfaces 2L, 2R (the horizontal direction) by being guided by the guide sleeve. The caliper 6 is configured with a pressing mechanism housing portion 6a that is connected to the guide sleeve and houses the pad pressing device 10, a pad support portion 6b for supporting the right brake pad 5, and a coupling portion 6c for coupling the housing portion 6a and the support portion 6b to each other.

The left and right brake pads 4 and 5 are configured, respectively, with pad members 4a, 5a that are brought into contact with the rotor surfaces 2L, 2R of the disc rotor 2, and metal plate members 4b, 5b that are attached to the rear surfaces of the pad members 4a, 5a (the surfaces that are not in contact with the disc rotor 2).

The pad pressing device 10 is configured with a brake actuator (not shown) that is activated when a braking operation is performed, an operating shaft 20, a slide block 30, a return spring 15, a pad pushing mechanism 40, and an adjuster mechanism 50. The operating shaft 20 is configured with a shaft main body 21 that extends substantially parallel to the rotor surfaces of the disc rotor 2 and in the front-back direction, and a lever portion 22 that extends upward from substantially the middle of the shaft main body 21. A concavity 22a that is connected to a tip of an actuating portion of the brake actuator is formed at an upper end portion of the lever portion 22.

A side surface of the shaft main body 21 that faces the disc rotor 2 has a substantially semicircular convex surface 23, and a surface of the same on the side opposite to the disc rotor 2 (the side surface facing the inner surface to the left of the caliper 6) has a substantially semicircular concavity 24 that extends in the front-back direction. A cylindrical shaft support member 25 extending in the front-back direction is fitted in the concavity 24, with a bearing 26 therebetween. The shaft support member 25 is machined to have a smooth surface. The position of the center of curvature of the convex surface 23 and the position of the central axis of the shaft support member 25 are off in the vertical direction. As shown in FIG. 2, the convex surface 23 is provided at the front and back, with the lever portion 22 therebetween.

The inner surface to the left of the caliper 6 (the pressing mechanism housing portion 6a) is provided with a flat portion 18 that is substantially parallel to the rotor surfaces of the disc rotor 2. This flat portion 18 has a substantially semicircular support concavity 19 that extends in the front-back direction and is in the shape corresponding to the shape of a surface of the shaft support member 25. This support concavity 19 is formed by casting together with the caliper 6 but is not followed by a finishing work for creating a smooth surface. Specifically, the support concavity 19 is merely formed by casting. Alternatively, the support concavity 19 is only subjected to rough machining after casting. Therefore, the coefficient of friction of a surface of the support concavity 19 is greater than the coefficient of friction of the surface of the shaft support member 25. The operating shaft 20 is supported on an inner surface of the caliper 6 by the shaft support member 25, a portion of which is inserted into the surface of the support concavity 19, and is turned along the surface of the shaft support member 25.

The slide block 30 is provided closer to the disc rotor 2 than to the operating shaft 20 and adjacent to the operating shaft 20. The slide block 30 is provided in such a manner as to be movable in the direction substantially perpendicular to the rotor surfaces of the disc rotor 2 (the horizontal direction) by being guided by a bearing (not shown) provided inside the caliper 6 (the pressing mechanism housing portion 6a). The surface of the slide block 30 that faces the convex surface 23 of the shaft main body 21 has as a substantially semicircular concave surface 31 corresponding to the convex surface 23. This concave surface 31 is provided with a bearing 32 (e.g., a needle bearing). Front and rear end portions of the slide block 30 are provided respectively with shaft support portions 33 for regulating the back-and-forth movement of the shaft main body 21 by supporting the front and rear end portions of the shaft main body 21 (see FIG. 2).

The return spring 15 is provided in a compressed manner between a wall portion 17 located at the right end portion of the inside of the caliper 6 (the pressing mechanism housing portion 6a) and a spring support concavity 34 formed at the right end portion of the slide block 30. The slide block 30 is biased toward the operating shaft 20 by the elastic force of the return spring 15. The concave surface 31 of the slide block 30 is in abutment with the convex surface 23 of the shaft main body 21, with the bearing 32 therebetween. Furthermore, the shaft support member 25 is inserted into the concavity 24 of the shaft main body 21, with the bearing 26 therebetween. Then, this shaft support member 25 is inserted into the support concavity 19 formed inside the caliper 6.

In this manner, the return spring 15 presses the operating shaft 20 against the shaft support member 19, which is inserted into the support concavity 19 provided on the inside of the caliper 6, through the slide block 30, regulating the horizontal movement of the operating shaft 20. In addition, the operating shaft 20 is supported while having the back-and-forth movement thereof regulated by the shaft support portions 33 of the slide block 30. The operating shaft 20 is also supported while having the vertical movement thereof regulated by the abutment between the concave surface 31 of the slide block 30 and the convex surface 23 and the fitting between the shaft support member 25 and the concavity 24. The operating shaft 20 is supported in such a manner that the convex surface 23 can be rotated and moved along the concave surface 31 of the slide block 30 by the bearing 32 provided on the concave surface 31. In addition, the operating shaft 20 is supported by the bearing 26 provided in the concavity 24, in such a manner as to be turnable along the surface of the shaft support member 25.

As shown in FIG. 2, the pad pushing mechanism 40 is configured with a pair of front and back nut members 41, 42 coupled to the slide block 30, screw members 43, 44 attached to the front and back nut members 41, 42 respectively, and a head member 45 attached to the tips (right end portions) of the screw members 43, 44. The nut members 41, 42, in a substantially cylindrical shape, are coupled to the slide block 30 so as to be movable together with the slide block 30 in the direction substantially perpendicular to the rotor surfaces of the disc rotor 2 (the horizontal direction). Inner circumferential surfaces of the nut members 41, 42 are threaded.

The screw members 43, 44 are in a substantially cylindrical shape, and outer circumferential surfaces of the screw members 43, 44 are threaded. The screw members 43, 44 are attached by screwing to the nut members 41, 42 respectively. The head member 45 is attached to the tips of the screw members 43, 44. The head member 45 is in the shape of a substantially flat board, and the left brake pad 4 (the plate member 4b) is in contact with the right side surface of the head member 45.

As shown in FIG. 2, the adjuster mechanism 50 is configured with an adjuster pin (not shown), a first wheel 52, a second wheel 53, a wrap spring 54, a cone member 55, a clutch spring 56, and an interlocking gear train 57. The adjuster pin, although not shown, is fixed to a rear end surface of the operating shaft 20 (the shaft main body 21) and moves in the vertical direction as the operating shaft 20 turns.

The first wheel 52 is a cylindrical member that is provided in an outer circumferential portion of the nut member 42 so as to be rotatable relative to the nut member 42. An insertion hole (not shown) into which a tip of the adjuster pin is inserted is formed in the first wheel 52. The inner diameter of this insertion hole is greater than the outer shape of the adjuster pin, and a predetermined gap (space) is provided between an inner surface of the insertion hole and the adjuster pin. The first wheel 52 rotates relative to the nut member 42 when the adjuster pin moves vertically as the operating shaft 20 turns and presses the inner surface of the insertion hole.

The second wheel 53, too, is a cylindrical member that is provided in the outer circumferential portion of the nut member 42 (at a position to the left of the first wheel 52) so as to be rotatable relative to the nut member 42. A first tapered surface 53a tapering to the right is formed on an inner surface of the left end portion of the second wheel 53. A second tapered surface 53b expanding to the right is formed at a position on an inner surface of the second wheel 53 that is located to the right of the first tapered surface 53a.

The wrap spring 54 has one end portion thereof attached to the first wheel 52 and the other end portion to the second wheel 53 and is provided in such a manner as to surround outer circumferential portions of the first and second wheels 52 and 53. The wrap spring 54 is configured to transmit, to the second wheel 53, a rotary movement of the first wheel 52 in only one direction, based on the direction of rotation of the first wheel 52 and the winding direction of the wrap spring 54. More specifically, when the first wheel 52 is rotated in the winding direction of the wrap spring 54, the first and second wheels 52 and 53 are held by the wrap spring 54 as the inner diameter of the wrap spring 54 becomes small, thereby transmitting the rotary movement of the first wheel 52 to the second wheel 53. On the other hand, when the first wheel 52 is rotated in the direction opposite to the winding direction of the wrap spring 54, the wrap spring 54 does not hold the first and second wheels 52 and 53 because the inner diameter of the wrap spring 54 increases, so the rotary movement of the first wheel 52 is not transmitted to the second wheel 53. The relationship between the direction of rotation of the first wheel 52 and the winding direction of the wrap spring 54 is described hereinafter.

The cone member 55 is configured with a disc-shaped main body 55a disposed outside the nut member 42, and an insertion portion 55b that extends from a middle portion of the main body 55a to the left and is inserted into the nut member 42 through a mounting hole formed in the nut member 42. An outer circumferential portion of the insertion portion 55b and the mounting hole are each shaped into a hexagon; thus, the cone member 55 is provided in the nut member 42 so as to be movable relative to the nut member 42 in the horizontal direction and rotatable integrally with the nut member 42. A washer 58 is attached to the right end portion of the insertion portion 55b by a bolt. The clutch spring 56 is provided in a compressed manner between an inner surface of the left end of the nut member 42 and the washer 58. The cone member 55 is biased to the right by the elastic force of this clutch spring 56, and an outer circumferential end portion of the main body 55a is held by the first tapered surface 53a of the second wheel 53. In this state, the second tapered surface 53b of the second wheel 53 is in abutment with an outer circumferential end portion of the nut member 42.

The interlocking gear train 57 is configured with a first gear 57a that is fixed to the right end portion of the nut member 42 and rotates integrally with the nut member 42, a second gear 57b that is provided rotatably at a position on the right end side of the slide block 30 and meshes with the first gear 57a, and a third gear 57c that is fixed to the right end portion of the nut member 41 at the front, rotates integrally with the nut member 41, and meshes with the second gear 57b.

In the disc brake device 1 according to the foregoing configuration, the execution of a braking operation causes the brake actuator to press and swing the tip of the lever portion 22 of the operating shaft 20 in the brake actuation direction in accordance with the operation amount (the direction of arrow A shown in FIG. 1). As a result of swinging the lever portion 22 in this manner, the shaft main body 21 is turned clockwise in FIG. 1 by leverage. At this moment, the shaft main body 21 is turned clockwise along the surface of the shaft support member 25. The shaft main body 21 is disposed in such a manner that the position of the center of curvature of the convex surface 23 and the position of the central axis of the shaft support member 25 are off (offset) in the vertical direction. For this reason, when the shaft main body 21 is turned clockwise, the convex surface 23 moves the slide block 30 in the direction of pressing the slide block 30, with the bearing 32 therebetween (in the direction against the biasing force of the return spring 15) while turning clockwise along the concave surface 31 of the slide block 30.

When the convex surface 23 moves the slide block 30 in the direction of pressing the slide block 30 as the shaft main body 21 turns, the slide block 30 is moved toward the left rotor surface 2L of the disc rotor 2 integrally with the pad pushing mechanism 40 (the nut members 41, 42, the screw members 43, 44, and the bed member 45) against the biasing force of the return spring 15. Consequently, the left brake pad 4 that is in contact with the head member 45 is pressed against the left rotor surface 2L. Using the reaction force resulting from pressing the left brake pad 4 against the left rotor surface 2L, the caliper 6 is moved to the left in FIG. 1. As a result, the right brake pad 5 supported by the pad support portion 6b of the caliper 6 is pressed against the right rotor surface 2R of the disc rotor 2. In this manner, with the left and right sides of the disc rotor 2 being held between the left and right brake pads 4 and 5, the frictional force that is generated therebetween applies a brake to the disc rotor 2 and the wheel.

Moreover, turning the shaft main body 21 clockwise in FIG. 1 as a result of the braking operation moves downward the adjuster pin of the adjuster mechanism 50 fixed to the shaft main body 21. When the adjuster pin is moved downward past the gap between the adjuster pin and the inner surface of the insertion hole of the first wheel 52, it causes the adjuster pin to press the inner surface of the insertion hole and the first wheel 52 to rotate relative to the nut member 42. The winding direction of the wrap spring 54 is the same as this direction of rotation of the first wheel 52. Therefore, when the first wheel 52 is rotated, the inner diameter of the wrap spring 54 becomes small. Consequently, the first and second wheels 52 and 53 are held by the wrap spring 54, and the rotary movement of the first wheel 52 is transmitted to the second wheel 53, rotating the second wheel 53 counterclockwise.

As a result of rotating the second wheel 53 in this manner, the rotational force thereof is transmitted to the nut member 42 that is in abutment with the cone member 55 (the main body 55a) and the second tapered surface 53b, the cone member 55 being held by the first tapered surface 53a of the second wheel 53, thereby rotating the cone member 55 integrally with the nut member 42. The threads formed on the inner circumferential surface of the nut member 42 and the outer circumferential surface of the screw member 44 are configured in such a manner that the screw member 44 is moved relative to the nut member 42 in the direction toward the left rotor surface 2L of the disc rotor 2 as a result of the rotation of the nut member 42. Therefore, when the nut member 42 is rotated, the screw member 44 moves relative to the nut member 42 in the direction toward the left rotor surface 2L.

Also, such rotary movement of the nut member 42 is transmitted to the nut member 41 at the front via the interlocking gear train 57 (the first to third gears 57a to 57c), rotating the nut member 41 in the same direction. The threads that are formed in the nut member 41 and the screw member 43 at the front, too, are configured in the same manner as the nut member 42 and the screw member 44. Therefore, the screw member 41, too, is moved relative to the nut member 41 in the direction toward the left rotor surface 2L by the same distance as the screw member 44. Consequently, the left brake pad 4 is moved toward the left rotor surface 2L via the head member 45 attached to the screw member 43, 44. Once the left brake pad 4 comes into abutment with the left rotor surface 2L, the resistance to the relative movements of the screw members 43, 44 increases. As a result, a slide occurs in the portion held between the first tapered surface 53a of the second wheel 53 and the cone member 55 and the abutment portion between the second tapered surface 53b and the nut member 42, preventing the left brake pad 4 from further moving toward the left rotor surface 2L. Therefore, even when the distance between the left brake pad 4 and the left rotor surface 2L increases due to wear of the left brake pad 4, the distance can be adjusted to an appropriate distance at the time of brake actuation.

Releasing the braking operation leads to release of the pressing force applied by the brake actuator to the lever portion 22, and thereby the slide block 30 is moved away from the left rotor surface 2L of the disc rotor 2 integrally with the pad pushing mechanism 40 by the elastic force of the return spring 15, releasing the brake application to the wheel.

When the slide block 30 is moved away from the left rotor surface 2L, the convex surface 23 of the shaft main body 21 is moved away from the left rotor surface 2L (to the left) while turning counterclockwise in FIG. 1 along the concave surface 31 of the slide block 30 with the bearing 32 therebetween. At this moment, the shaft main body 21 is turned counterclockwise along the surface of the shaft support member 25.

As a result of releasing the braking operation and turning the shaft main body 21 clockwise in FIG. 1, the adjuster pin of the adjuster mechanism 50 fixed to the shaft main body 21 is moved upward. Moving the adjuster pin upward past the gap between the adjuster pin and the inner surface of the insertion hole of the first wheel 52, the adjuster pin presses the inner surface of the insertion hole, moving the first wheel 52 relative to the nut member 42. Because the winding direction of the wrap spring 54 is set as described above, the inner diameter of the wrap spring 54 becomes large when the first wheel 52 is rotated. As a result, the binding force of the wrap spring 54 applied to the first and second wheels 52 and 53 weakens, and consequently the rotary movement of the first wheel 52 cannot be transmitted to the second wheel 53. Therefore, the nut member 42 is not rotated clockwise, and the screw member 44 is not moved relative to the nut member 42 in the direction away from the left rotor surface 2L. The appropriate distance between the left brake pad 4 and the left rotor surface 2L that is adjusted at the time of brake actuation is kept as it is.

According to this disc brake device 1 the support concavity 19 with a rough surface is formed on the inner surface of the caliper 6. By inserting the cylindrical shaft support member 25 into the support concavity 6, the operating shaft 20 can be supported turnably by the shaft support member 25. In other words, the support structure of the operating shaft 20 can be created without finishing the surface of the support concavity 19. This means that the number of complicated machining steps performed on the interior of the caliper 6 can be reduced, achieving a reduction in manufacturing cost.

According to the disc brake device 1, the support concavity 19 to be formed on the inner surface of the caliper 6 is casted together with the caliper 6 but is not subjected to surface finishing or the like thereafter. This eliminates the need to perform a process for inserting a tool and the like into the caliper 6 to form the support concavity, achieving a further reduction in manufacturing cost. This also enables easy and inexpensive production of a caliper with an integral bridge. In addition, casting fluctuation can be avoided by setting the support concavity 19 as a reference position for machining the caliper 6. In so doing, a position where a jig of the same shape as the operating shaft 20 is combined with the support concavity 19 is taken as the reference position, so that a position where the casted surface (surface) of the support concavity 19 actually comes into contact with the operating shaft 20 can be recreated.

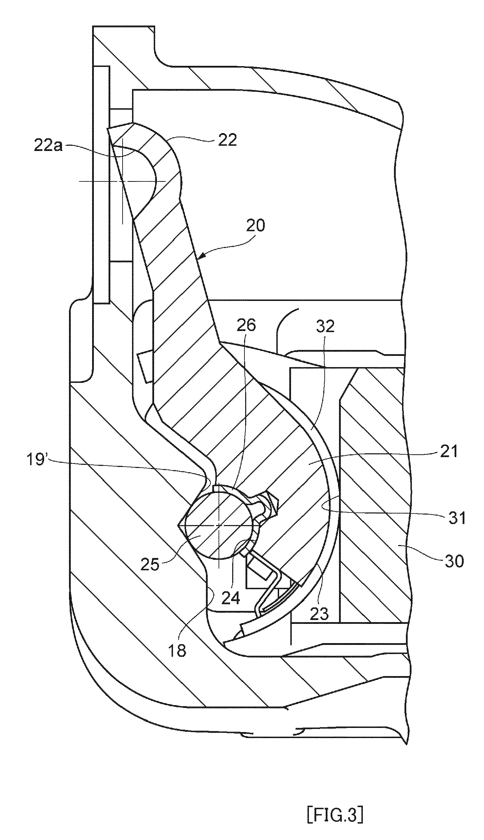

The embodiment according to the present invention has been described, however, the scope of the present invention is not limited to the foregoing embodiment. For instance, in the foregoing embodiment, the substantially semicircular support concavity 19 corresponding to the shape of the surface of the shaft support member 25 is formed on the inner surface of the caliper 6. However, the shape of the support concavity is not limited to a substantially circular shape; thus, a support concavity 19' that has a substantially triangular shape when viewed in a vertical section may be formed, as shown in FIG. 3. Furthermore, in the foregoing embodiment, the radius of the arc of the support concavity 19 may be made slightly smaller than the radius of the operating shaft 20, and the support concavity 19 may be brought into contact with the operating shaft 20 at both ends of the arc of the support concavity 19. In addition, the support concavity 19 may have a shape such that the support concavity 19 comes into contact with the operating shaft 20 at both ends thereof also in the shaft axial direction, i.e., the middle portion of the support concavity 19 may be slightly depressed. Accordingly, the stability of the operating shaft 20 can be improved when incorporating the operating shaft 20 in the support concavity 19.

### Explanation of numerals and characters

- 1: Disc brake device

- 2: Disc rotor
- 4, 5: Brake pad
- 6: Caliper (brake housing)
- 10: Pad pressing device
- 15: Return spring (brake release spring)
- 19: Support concavity
- 20: Operating shaft (brake shaft)
- 25: Shaft support member
- 30: Slide block
- 40: Pad pushing mechanism

## Claims

1. A disc brake device comprising: a disc rotor that rotates along with a wheel; a brake pad that is disposed to face a rotor surface of the disc rotor; a pad pressing device that presses the brake pad against the rotor surface; and a brake housing that houses the pad pressing device therein, the disc brake device being configured to apply a brake to the disc rotor and the wheel by using frictional force generated between the brake pad and the rotor surface when the pad pressing device presses the brake pad against the rotor surface, wherein
the pad pressing device has: a brake actuator that is actuated when a braking operation is performed; a brake shaft that is disposed substantially parallel to the rotor surface and turned in a brake actuation direction by the actuation of the brake actuator; a pad pushing mechanism that moves the brake pad toward the rotor surface by means of the turning motion of the brake shaft; and a brake release spring that moves the pad pushing mechanism away from the rotor surface and turns the brake shaft in a brake release direction when the braking operation is released,
the brake shaft is supported on an inner surface of the brake housing by a cylindrical shaft support member extending substantially parallel to the rotor surface, and is turned in the brake actuation direction and the brake release direction along a surface of the shaft support member,
the shaft support member is provided in such a manner that a portion of the surface thereof is inserted into a support concavity that is formed on the inner surface of the brake housing, and
a coefficient of friction of a surface of the support concavity is greater than a coefficient of friction of the surface of the shaft support member.

2. The disc brake device according to claim 1, wherein
the shaft support member is finished to have a smooth surface, and
the support concavity is formed by casting at the same time as when the brake housing is formed by casting, and has a surface that remains rough without being finished.
